# EUROPÄISCHE PATENTSCHRIFT

(11) **EP 2 151 166 B1**
(45) Veröffentlichungstag und Bekanntmachung des Hinweises auf die Patenterteilung: **01.05.2013**
(21) Anmeldenummer: 09009779.1
(22) Anmeldetag: 29.07.2009
(51) Int. Cl.: A22C 13/00

(54) **Essbare Nahrungsmittelhülle auf Basis von Proteinen und Verfahren zu deren Herstellung**
Edible food casing on a protein basis and method for its manufacture
Enveloppe de produit alimentaire pouvant être mangée à base de protéines et son procédé de fabrication

(30) Priorität: 07.08.2008 DE 102008036850
(43) Veröffentlichungstag der Anmeldung: 10.02.2010
(73) Patentinhaber: Kalle GmbH, 65203 Wiesbaden (DE)
(72) Erfinder: Schmidt, Michael, 65375 Oestrich-Winkel (DE); Stalberg, Stefanie, Dr., 65232 Taunusstein (DE); Büker, Marion, 56379 Singhofen (DE); Büker, Gert, 56379 Singhofen (DE)
(74) Vertreter: Plate, Jürgen

(56) Entgegenhaltungen:
- EP-A- 1 371 293
- WO-A-03/041504
- WO-A-2006/135238
- DE-C- 678 872
- GB-A- 1 261 299

## Beschreibung

Die Erfindung betrifft eine eßbare Nahrungsmittelhülle auf Basis eines nicht-hitzekoagulierenden Proteins, ein Verfahren zu deren Herstellung, ein Nahrungsmittelprodukt, das diese Hülle umfaßt, sowie ein Verfahren zur Herstellung des Nahrungsmittelprodukts. US-A-1261299 betrifft eine derartige Hülle.

Bei der Herstellung von Bratwurst werden bisher praktisch ausschließlich Naturdärme eingesetzt, insbesondere aus dem Dünndarm von Schafen (Schaf-Saitlinge) oder Rindern, insbesondere von Cebu-Rindern. Diese stammen überwiegend aus Südamerika (Brasilien, Argentinien). Aufgrund von Tierseuchen, wie der Jakob-Kreutzfeld-Krankheit oder BSE, wurden jedoch in Europa Importverbote oder - beschränkungen verhängt. Es bestand daher ein Bedarf an eßbaren, d.h. für den Mitverzehr geeigneten Hüllen, die solchen Verboten oder Beschränkungen nicht unterliegen.

Es wurden daher eßbare Hüllen entwickelt, die keine Bestandteile tierischer Herkunft umfassen. So ist in der DE 101 29 539 eine Hülle offenbart, die aus einer Mischung von Cellulose, (pflanzlichem) Protein und einem feingemahlenen Füllstoff, wie feingemahlene Weizenkleie, hergestellt wird. Das Protein kann dabei auch vernetzt sein. Hergestellt wird die Hülle allgemein nach dem Aminoxid-Verfahren, bei dem vorzugsweise N-Methyl-morpholin-N-oxid als Lösungsmittel eingesetzt wird. Die Hülle ist prinzipiell auch für Bratwurst geeignet. Sie kann jedoch nicht durch Coextrusion unmittelbar bei der Wurstherstellung erzeugt werden.

Lange bekannt sind auch eßbare, dünnwandige Kollagen-Därme. Als Ausgangsmaterial dienen rohe Rinderhäute. Von diesen wird der "Hautspalt" oder "Unterspalt" in den Gerbereien abgespalten, dann alkalisch aufgeschlossen und der Aufschluß schließlich durch Zusatz von Säure abgebrochen. Der alkalische Aufschluß wird allgemein mit Hilfe von Natronlauge oder Kalkmilch durchgeführt. Bei der abschließenden Säuerung wird allgemein ein pH-Wert von weniger als 3 eingestellt. Die so erhaltenen "Kollagenschwarten" werden dann zerkleinert und mit Zusatzstoffen wie Glycerin in einem Kneter vermischt. Auf diese Weise wird eine gelartige Kollagenmasse erzeugt, aus der durch Extrusion mit Hilfe einer Ringschlitzdüse schlauchförmige Wursthüllen hergestellt werden können. Dies erfolgt entweder nach dem "Trockenspinnverfahren", bei dem eine Extrusionsmasse mit einem hohen Feststoffgehalt eingesetzt wird, oder nach dem "Naßspinnverfahren", bei dem Kollagenmassen mit einem niedrigen Feststoffanteil zur Anwendung gelangen. Die schlauchförmigen Kollagenhüllen werden in der Regel zusätzlich gehärtet (s. B.-A. Lang, G. Effenberger, Wursthüllen - Kunstdarm, Deutscher Fachverlag, Frankfurt a.M., 3. Aufl. [2006] S. 58 - 62). Die Herstellung von Kollagendärmen ist damit relativ aufwendig. Durch Coextrusion unmittelbar bei der Wurstherstellung lassen sich die Hüllen nicht herstellen.

Bratwürste mit einer durch Coextrusion erzeugten Hülle auf Basis von Na-Alginat sind bereits bekannt. Nach der Coextrusion wird das in Wasser leicht lösliche Na-Alginat durch Behandeln mit wäßriger Calciumhydroxid- oder Calciumchlorid-Lösung in schwer lösliches Ca-Alginat umgewandelt. Das Wurstbrät enthält jedoch NaCl, das bei einer Lagerung der Würste das Ca-Alginat langsam wieder in Na-Alginat zurückverwandelt. Das führt zu einer Destabilisierung der Hülle. Verlangsamen läßt sich dieser Prozeß allenfalls durch Tiefgefrieren der Würste.

Es bestand daher nach wie vor die Aufgabe, eine Wurst in einer nahtlosen, eßbaren Hülle herzustellen, wobei die Hülle erst im Moment der Wurstherstellung durch Coextrusion geschaffen wird. Die Hülle soll auch ohne Trocknung oder Vernetzung mit Rauch mechanisch ausreichend stabil sein. Die Hülle soll zudem so beschaffen sein, daß sie auch beim Braten oder Grillen ihre Form und Festigkeit behält (oder sogar noch steigert) und nicht etwa zerfließt.

Gefunden wurde, daß sich die Aufgabe lösen läßt mit einer extrudierbaren Masse, die als wesentliche Bestandteile ein nicht-hitzekoagulierendes Protein sowie, damit vermischt, mindestens einen hitzekoagulierenden Stoff enthält.

Gegenstand der vorliegenden Erfindung ist demgemäß eine eßbare Nahrungsmittelhülle auf Basis von filmbildendem, nicht-hitzekoagulierendem Protein, das dadurch gekennzeichnet ist, daß dieses Protein abgemischt ist mit einem hitzekoagulierenden Mittel.

Das hitzekoagulierende Mittel ist bevorzugt ein hitzekoagulierendes Protein, insbesondere Eiweiß aus Hühnereiern, Blutplasma, Molkeisolat, Globin oder Myosin. Es kann auch eine Mischung von mehreren hitzekoagulierenden Proteinen verwendet werden. Es bewirkt beim Erhitzen, speziell beim Braten oder Grillen der Wurst, eine Verfestigung der Hülle. Der Anteil des hitzekoagulierenden Mittels beträgt allgemein etwa 5 bis 200 Gew.-%, bevorzugt 10 bis 100 Gew.-%, besonders bevorzugt 20 bis 75 Gew.-%, jeweils bezogen auf das Gewicht des nicht-hitzekoagulierenden Proteins. Das Mittel, das beim Erwärmen oder Erhitzen koaguliert und auf diese Weise zur Festigkeit der Hülle beiträgt, ist bevorzugt ein Protein mit einem hohen Anteil an Lysin- und Glutaminsäure-Einheiten. Er bewirkt eine Verfestigung der Hülle beim Braten oder Grillen der Wurst.

Eine zusätzliche Vernetzung der Hülle mit Aldehyden oder Dialdehyden, wie Formaldehyd oder Glutardialdehyd, mit vegetabilen Gerbstoffen, mit mehrwertigen Ionen oder mit Flüssigrauch ist prinzipiell möglich, jedoch nicht erforderlich.

Die erfindungsgemäßen Hüllen, die zusätzlich mindestens ein hitzekoagulierendes Protein enthalten, schrumpfen erst bei höheren Temperaturen als Hüllen ohne einen solchen Zusatz.

Das filmbildende, nicht-hitzekoagulierende Protein ist bevorzugt Kollagen und/oder ein Kollagen-Derivat, wie Desamidokollagen. Geeignete Kollagene sind in der nichtveröffentlichten DE 10 2007 061 710 beschrieben. Es können auch Mischungen mehrerer filmbildender, nicht-hitzekoagulierender Proteine eingesetzt werden.

Die erfindungsgemäße Nahrungsmittelhülle kann als Flachfolie oder auch als (vorzugsweise nahtlose) Schlauchfolie hergestellt werden. Insbesondere wird sie durch Coextrusion praktisch gleichzeitig mit der Herstellung des Nahrungsmittelprodukts generiert. In diesem Fall müssen bei der Wurstherstellung keine Hüllen vorrätig gehalten werden, sie werden vielmehr erst beim Gebrauch gebildet.

Gegenstand der vorliegenden Erfindung ist ferner ein Nahrungsmittelprodukt in der erfindungsgemäßen, vorzugsweise schlauchförmigen Hülle. Das Nahrungsmittel mit der Hülle ist bevorzugt ein Fleischprodukt, insbesondere Wurstbrät. Besonders bevorzugt ist das Nahrungsmittelprodukt eine Bratwurst, beispielsweise eine "Breakfast Sausage".

Gegenstand der Erfindung ist daneben ein Verfahren zur Herstellung eines Nahrungsmittelprodukts in der erfindungsgemäßen eßbaren Hülle. Es umfaßt die Schritte:
a) Bereitstellen einer (co-)extrudierbaren Mischung mit mindestens einem filmbildenden, nicht-hitzekoagulierenden Protein und mindestens einem hitzekoagulierenden Mittel,
b) Bereitstellen eines pastösen Nahrungsmittels, das sich durch ein Füllrohr einer Wurstfüllmaschine stopfen läßt,
c) Extrudieren des pastösen Nahrungsmittels, wobei dieses beim Verlassen des Füllrohrs mit einer durch Coextrusion erzeugten Umhüllung aus dem Gemisch gemäß a) umgeben wird,
d) Verfestigen der Umhüllung durch Behandeln mit einer wäßrigen Salzlösung, die das Protein ausfällt, mit vernetzenden Stoffen oder mit organischen Lösungsmitteln, wie Ethanol,
e) gegebenenfalls Trocknen, und
f) gegebenenfalls Verpacken des umhüllten Nahrungsmittels in einer Zweitverpackung, beispielsweise einer Folienverpackung.

Die (Co-)Extrusionsmasse, aus der die Umhüllung der Wurst gebildet wird, weist bei Extrusion etwa 5°C auf. Der Trockengewichtsanteil an filmbildenden, nicht-hitzekoagulierenden Proteinen und hitzekoagulierenden Stoffen beträgt zusammen etwa 2 bis 10 Gew.-%, bevorzugt etwa 3 bis 8 Gew.-%, bezogen auf das Gesamtgewicht der (Co-)Extrusionsmasse.

Das Verfestigen der Umhüllung erfolgt vorzugsweise mit einer wäßrigen Salzlösung, beispielsweise einer 20 gew.-%igen bis gesättigten Kochsalz-Lösung oder einer wäßrigen Phosphat-Lösung, beispielsweise einer 40 bis 50 gew.-%igen wäßrigen Na₂HPO₄-Lösung. Die Salzlösung wird zweckmäßig auf die Umhüllung aufgesprüht oder aufgegossen, unmittelbar nachdem sich diese bei der Coextrusion gebildet hat. Zusätzlich kann das umhüllte Nahrungsmittelprodukt noch durch ein entsprechendes Salzbad geführt werden. Durch die Behandlung mit dem Salz werden die Proteine ausgefällt, wodurch die Umhüllung mechanische Stabilität erlangt. Theoretisch kann das Protein auch mit (verdünntem) Alkohol ausgefällt und die Hülle auf diese Weise stabilisiert werden. Diese Möglichkeit ist jedoch aus naheliegenden Gründen weniger geeignet.

In einem nachfolgenden, weiteren wäßrigen Bad (oder auch kombiniert mit der Salzlösung, sofern der pH-Wert der Salzlösung dafür geeignet ist) kann eine Behandlung mit Transglutaminase erfolgen. Diese enzymatische Behandlung mit der Transglutaminase bewirkt eine Vernetzung der Protein-Moleküle, was die Umhüllung ebenfalls mechanisch stabiler werden läßt. Die Transaminase direkt mit der Extrusionsmasse zu vermischen hat sich als weniger zweckmäßig herausgestellt. Die Vernetzung erfolgt dann meist zu schnell, so daß sich die Masse nicht mehr homogen extrudieren läßt.

Soweit die Hülle durch (Co-)Extrusion mit Hilfe einer Ringdüse hergestellt wird, ist sie auch nahtlos. Es lassen sich jedoch auch Flachfolien herstellen. Dazu wird die Mischung mit einem (oder mehreren) filmbildenden, nicht hitzekoagulierenden Protein und einem (oder mehreren) hitzekoagulierenden Mittel beispielsweise auf einen geeigneten Träger (das kann im einfachsten Fall eine Glasplatte sein) in Form einer möglichst gleichmäßigen Schicht aufgegossen oder aufgerakelt. Überschüssiges Wasser wird dann abgepreßt. Nach dem Verfestigen, insbesondere auf die oben beschriebene Weise mit einer Salzlösung, läßt sich die Folie von dem Träger lösen.

Das Nahrungsmittelprodukt (z.B. Bratwurst) in der erfindungsgemäßen, durch Coextrusion hergestellten Hülle wird zweckmäßig "endlos" hergestellt und dann in einzelne Würste separiert, z.B. mit einer sogenannten Verdrängerschere. Ein Verschließen oder Abdrehen der Hülle zwischen den dabei erzeugten einzelnen Würsten oder gar das Anbringen von Draht- oder Kunststoff-Clips ist nicht erforderlich.

Gegebenenfalls wird das Nahrungsmittelprodukt mit der umgebenden, verfestigten Hülle getrocknet, in der Regel mit Luft von nicht mehr als etwa 30 °C.

Das umhüllte Nahrungsmittelprodukt ist insbesondere dafür vorgesehen, beim Endverbraucher auf eine Temperatur erhitzt zu werden, bei der eine Hitzekoagulation in der Hülle einsetzt. Insbesondere ist das Nahrungsmittelprodukt eines der in England und USA verbreiteten "Breakfast Sausages". Da dieser Wurst-Typ beim Hersteller nicht geräuchert und nicht erhitzt wird, bleibt die Hülle farblos transparent, so daß das Brät zu sehen ist.

Gegebenenfalls können der Extrusionsmasse auch Lebensmittelfarben (z.B. E120, Cochenille, ein roter Farbstoff gemäß Color Index No. 75470) zugemischt werden, beispielsweise bei der Herstellung der in Skandinavien verbreiteten "Roten Pölser (Røde Pølser)", einer speziellen Art von Hotdogs.

Im Prinzip können auch normale Hotdogs auf die oben beschriebene Weise hergestellt werden. Dabei wird die Hülle dann noch mit Flüssigrauch vernetzt (wobei sich die Hülle braun bis rotbraun verfärbt). Getrocknet werden die Hotdogs üblicherweise bei erhöhter Temperatur (etwa 80 °C).

Zusätzlich zu oder auch anstelle von filmbildendem, nicht-hitzekoagulierendem Protein kann gegebenenfalls auch ein Polysaccharid, speziell Alginat eingesetzt werden. Auch die eingangs beschriebenen Alginathüllen lassen sich durch den Zusatz von hitzekoagulierenden Mitteln, insbesondere von hitzekoagulierenden Proteinen, stabilisieren.

Das nachfolgende Beispiel dient zur Illustration der Erfindung. Prozente sind darin als Gewichtsprozente zu verstehen, soweit nicht anders angegeben oder aus dem Zusammenhang unmittelbar ersichtlich.

### Beispiel:

Aus 680 ml Wasser, 200 g Eis, 100 g einer 40 %igen Kollagen-Masse und 20 g Blutplasma-Pulver wurde eine wäßrige, extrudierbare Masse hergestellt (der pH-Wert wurde dabei mit Essig- und Milchsäure auf etwa 2,5 bis 3,0 eingestellt). Nach mehrstündigem Quellen wurde sie homogenisiert, entgast und der Coextrusionsdüse einer Wurstfüllmaschine zugeführt. Bratwurstbrät wurde beim Austritt aus dem Füllrohr der Füllmaschine mit einer durchgehenden, nahtlosen Beschichtung aus der Extrusionsmasse umgeben. Die Beschichtung wurde unmittelbar nach ihrer Bildung mit 40 %iger Kaliumdihydrogenphosphat-Lösung übergossen und damit verfestigt. Die so umhüllte Bratwurst wurde mit Luft von etwa Raumtemperatur dann getrocknet, bis die Oberfläche im wesentlichen trocken war.

Beim Braten wie auch beim Grillen blieb die Umhüllung intakt. Sie hatte sich innig verbunden mit dem Wurstbrät. Die Bratwurst erfüllte alle üblichen Kriterien, insbesondere war die Hülle sehr gut kaubar.

## Patentansprüche

1. Eßbare Nahrungsmittelhülle auf Basis von filmbildendern, nicht hitzekoagulierendem Protein, **dadurch gekennzeichnet, daß** das Protein abgemischt ist mit einem hitzekoagulierenden Mittel.

2. Nahrungsmittelhülle gemäß Anspruch 1, **dadurch gekennzeichnet, daß** das hitzekoagulierende Mittel ein hitzekoagulierendes Protein, insbesondere Eiweiß aus Hühnereiern, Blutplasma, Molkeisolat, Globin, Myosin oder ein Gemisch davon ist.

3. Nahrungsmittelhülle gemäß Anspruch 1 oder 2, **dadurch gekennzeichnet, daß** das eßbare, extrudierbare, nicht-hitzekoagulierende Protein Kollagen und/oder ein Kollagen-Derivat ist.

4. Nahrungsmittelhülle gemäß einem oder mehreren der Ansprüche 1 bis 3, **dadurch gekennzeichnet, daß** das hitzekoagulierende Protein Lysin- und Glutaminsäure-Einheiten enthält.

5. Nahrungsmittelhülle gemäß einem oder mehreren der Ansprüche 1 bis 4, **dadurch gekennzeichnet, daß** der Anteil des hitzekoagulierenden Mittels 5 bis 200 Gew.-%, bevorzugt 10 bis 100 Gew.-%, besonders bevorzugt 20 bis 75 Gew.-%, beträgt, jeweils bezogen auf das Gewicht des nicht-hitzekoagulierenden Proteins.

6. Nahrungsmittelhülle gemäß einem oder mehreren der Ansprüche 1 bis 5, **dadurch gekennzeichnet, daß** sie schlauchförmig ist, bevorzugt auch nahtlos.

7. Nahrungsmittelprodukt mit einer das Nahrungsmittel umgebenden Hülle, **dadurch gekennzeichnet, daß** es sich um eine Hülle gemäß einem oder mehreren der Ansprüche 1 bis 6 handelt.

8. Verfahren zur Herstellung eines Nahrungsmittelprodukts in einer nahtlosen schlauchförmigen Hülle gemäß Anspruch 7, **dadurch gekennzeichnet, daß** es folgende Schritte umfaßt:
a) Bereitstellen einer (co-)extrudierbaren Mischung mit mindestens einem filmbildenden, nicht-hitzekoagulierenden Protein und mindestens einem hitzekoagulierenden Mittel,
b) Bereitstellen eines pastösen Nahrungsmittels, das sich durch ein Füllrohr einer Wurstfüllmaschine stopfen läßt,
c) Extrudieren des pastösen Nahrungsmittels, wobei dieses beim Verlassen des Füllrohrs mit einer durch Coextrusion erzeugten Umhüllung aus dem Gemisch gemäß a) umgeben wird,
d) Verfestigen der Umhüllung durch Behandeln mit einer wäßrigen Salzlösung, die das Protein ausfällt, mit vernetzenden Stoffen oder mit organischen Lösungsmitteln,
e) gegebenenfalls Trocknen, und
f) gegebenenfalls Verpacken des umhüllten Nahrungsmittels in einer Zweitverpackung, beispielsweise einer Folienverpackung.

9. Verfahren gemäß Anspruch 8, **dadurch gekennzeichnet, daß** die Co-Extrusionsmasse einen Trockengewichtsanteil von 2 bis 10 Gew.-%, bevorzugt etwa 3 bis 8 Gew.%, an filmbildenden, nicht-hitzekoagulierenden Proteinen und hitzekoagulierenden Stoffen zusammen enthält.

10. Verfahren gemäß Anspruch 8, **dadurch gekennzeichnet, daß** die wäßrige Salzlösung auf die Umhüllung des Nahrungsmittelprodukts aufgesprüht oder aufgegossen wird, unmittelbar nachdem die Umhüllung von der Coextrusionsdüse gebildet wurde.

11. Verfahren gemäß Anspruch 8, **dadurch gekennzeichnet, daß** das Nahrungsmittelprodukt nach dem Behandeln mit der wäßrigen Salzlösung mit einer wäßrigen Transaminase-Lösung behandelt wird.

12. Verfahren gemäß Anspruch 8, **dadurch gekennzeichnet, daß** das Nahrungsmittelprodukt mit einer wäßrigen Salzlösung behandelt wird, die zusätzlich Transaminase enthält.

13. Verfahren gemäß Anspruch 8, **dadurch gekennzeichnet, daß** als wäßrige Salzlösung eine wäßrige Kochsalzlösung oder eine wäßrige Natrium- oder Kaliumphosphat-Lösung eingesetzt wird.

14. Verfahren gemäß Anspruch 8, **dadurch gekennzeichnet, daß** das Trocknen (Schritte) mit Luft von 30 °C oder weniger erfolgt.

15. Verwendung einer Nahrungsmittelhülle gemäß einem oder mehreren der Ansprüche 1 bis 6 als eßbare künstliche Wursthülle, insbesondere als Bratwursthülle.

## Claims

1. An edible food casing based on film-forming non-heat-coagulating protein, wherein this protein is mixed with a heat-coagulating agent.

2. The food casing as claimed in claim 1, wherein the heat-coagulating agent is a heat-coagulating protein, in particular protein from hens' eggs, blood plasma, whey isolate, globin, myosin or a mixture thereof.

3. The food casing as claimed in claim 1 or 2, wherein the edible extrudable non-heat-coagulating protein is collagen and/or a collagen derivative.

4. The food casing as claimed in one or more of claims 1 to 3, wherein the heat-coagulating protein contains lysine units and glutamic acid units.

5. The food casing as claimed in one or more of claims 1 to 4, wherein the fraction of the heat-coagulating agent is 5 to 200% by weight, preferably 10 to 100% by weight, particularly preferably 20 to 75% by weight, in each case based on the weight of the non-heat-coagulating protein.

6. The food casing as claimed in one or more of claims 1 to 5, **characterized in that** it is tubular, preferably also seamless.

7. A food product having a casing enclosing the food, wherein the casing is a casing as claimed in one or more of claims 1 to 6.

8. A process for producing a food product in a seamless tubular casing as claimed in claim 7, which comprises the following steps:
a) providing a (co)extrudable mixture having at least one film-forming non-heat-coagulating protein and at least one heat-coagulating agent,
b) providing a pasty food which may be stuffed through a stuffing horn of a sausage stuffing machine,
c) extruding the pasty food, wherein this is enclosed, on leaving the stuffing horn, with a covering which is generated by coextrusion and is made of the mixture according to a),
d) solidifying the covering by treatment with an aqueous salt solution which precipitates out the protein, with crosslinkers, or with organic solvents,
e) if appropriate drying, and
f) if appropriate packing the enclosed food in a second packing, for example a film packing.

9. The process as claimed in claim 8, wherein the coextrusion mass has a dry weight fraction of 2 to 10% by weight, preferably about 3 to 8% by weight, of film-forming non-heat-coagulating protein and heat-coagulating agents together.

10. The process as claimed in claim 8, wherein the aqueous salt solution is sprayed or poured onto the covering of the food product immediately after the covering was formed by the coextrusion die.

11. The process as claimed in claim 8, wherein the food product, after treatment with the aqueous salt solution, is treated with an aqueous transaminase solution.

12. The process as claimed in claim 8, wherein the food product is treated with an aqueous salt solution which additionally contains transaminase.

13. The process as claimed in claim 8, wherein the aqueous salt solution used is an aqueous sodium chloride solution or an aqueous sodium or potassium phosphate solution.

14. The process as claimed in claim 8, wherein the drying (steps) proceeds with air of 30°C or below.

15. The use of a food casing as claimed in one or more of claims 1 to 6 as edible artificial sausage casing, in particular as bratwurst casing.

## Revendications

1. Enveloppe de produit alimentaire comestible à base de protéines filmogènes qui ne coagulent pas à la chaleur, **caractérisée en ce que** la protéine est mélangée à un agent coagulant à la chaleur.

2. Enveloppe de produit alimentaire selon la revendication 1, **caractérisée en ce que** l'agent coagulant à la chaleur est une protéine coagulant à la chaleur, en particulier de l'albumine d'oeuf de poule, du plasma sanguin, de l'isolat de petit lait, de la globine, de la myosine ou d'un mélange de ceux-ci.

3. Enveloppe de produit alimentaire selon la revendication 1 ou la revendication 2, **caractérisée en ce que** la protéine comestible, extrudable, ne coagulant pas à la chaleur, est du collagène et/ou un dérivé du collagène.

4. Enveloppe de produit alimentaire selon une ou plusieurs des revendications 1 à 3, **caractérisée en ce que** la protéine coagulant à la chaleur contient des unités de lysine et d'acide glutamique.

5. Enveloppe de produit alimentaire selon une ou plusieurs des revendications 1 à 4, **caractérisée en ce que** la fraction de l'agent coagulant à la chaleur atteint 5 à 200 % en poids, de préférence 10 à 100 % en poids, mieux encore 20 à 75 % en poids, respectivement par rapport au poids de la protéine ne coagulant pas à la chaleur.

6. Enveloppe de produit alimentaire selon une ou plusieurs des revendications 1 à 5, **caractérisée en ce qu'**elle présente une forme tubulaire, de préférence également sans couture.

7. Produit alimentaire avec une enveloppe entourant ledit produit alimentaire, **caractérisé en ce qu'**il s'agit d'une enveloppe selon une ou plusieurs des revendications 1 à 6.

8. Procédé de fabrication d'un produit alimentaire dans une enveloppe de forme tubulure sans couture selon la revendication 7, **caractérisé en ce qu'**il comprend les étapes consistant à :
a) préparer un mélange (co-)extrudable avec au moins une protéine filmogène ne coagulant pas à la chaleur et au moins un agent coagulant à la chaleur,
b) préparer un produit alimentaire pâteux, qui est refoulé à travers un tube de remplissage d'une machine à remplir les saucisses,
c) extruder le produit alimentaire pâteux, dans lequel celui-ci, à la sortie du tube de remplissage, est entouré d'une gaine produite par co-extrusion et formée d'un mélange selon a),
d) consolider la gaine par traitement avec une solution aqueuse de sel, qui précipite la protéine, avec des substances de réticulation ou avec des solvants organiques,
e) éventuellement sécher et
f) éventuellement conditionner le produit alimentaire gainé dans un emballage double, par exemple dans un emballage en film.

9. Procédé selon la revendication 8, **caractérisé en ce que** la masse de co-extrusion contient une fraction en poids sec de 2 à 10 % en poids, de préférence d'environ 3 à 8 % en poids, de protéines filmogènes non coagulant pas à la chaleur et de substances coagulant à la chaleur conjointement.

10. Procédé selon la revendication 8, **caractérisé en ce que** la solution aqueuse de sel est pulvérisée ou coulée sur la gaine du produit alimentaire directement après que le gainage a été formé par la buse de co-extrusion.

11. Procédé selon la revendication 8, **caractérisé en ce que** le produit alimentaire est, après le traitement avec la solution aqueuse de sel, traité avec une solution aqueuse de transaminase.

12. Procédé selon la revendication 8, **caractérisé en ce que** le produit alimentaire est traité avec une solution aqueuse de sel, qui contient en outre de la transaminase.

13. Procédé selon la revendication 8, **caractérisé en ce que** l'on utilise comme solution aqueuse de sel une solution aqueuse de sel de cuisine ou une solution aqueuse de phosphate de sodium ou de potassium.

14. Procédé selon la revendication 8, **caractérisé en ce que** le séchage (progressif) se fait avec de l'air à 30 °C ou moins.

15. Utilisation d'une enveloppe de produit alimentaire selon une ou plusieurs des revendications 1 à 6 comme gaine de saucisse artificielle comestible, en particulier comme gaine de saucisse fraîche.
